# EUROPÄISCHE PATENTSCHRIFT

(11) **EP 2 342 060 B1**
(45) Veröffentlichungstag und Bekanntmachung des Hinweises auf die Patenterteilung: **15.08.2012**
(21) Anmeldenummer: 09778545.5
(22) Anmeldetag: 16.09.2009
(51) Int. Cl.: B29C 47/08, B65G 33/08, B65G 33/32, B65G 65/46

(54) **DOSIERVORRICHTUNG**
DOSING DEVICE
DISPOSITIF DE DOSAGE

(30) Priorität: 04.11.2008 DE 102008055756
(43) Veröffentlichungstag der Anmeldung: 13.07.2011
(73) Patentinhaber: Woywod Kunststoffmaschinen GmbH & Co. Vertriebs KG, 82166 Gräfelfing bei München (DE)
(72) Erfinder: BOLLSCHWEILER, Hans, Reinhold, MC-98000 Monaco (MC)
(74) Vertreter: Beyer, Rudi
(86) Internationale Anmeldenummer: PCT/EP2009/006684
(87) Internationale Veröffentlichungsnummer: WO 2010/051879

(56) Entgegenhaltungen:
- EP-A- 1 544 138
- GB-A- 666 686
- GB-A- 1 055 251
- US-A- 3 355 766

## Beschreibung

Die Erfindung betrifft eine Dosiervorrichtung zum Beschicken von Vorrichtungen wie z. B. Extruder, Spritzgussmaschinen oder dergleichen, mit Schüttgütern wie Pellets, Spänen, Granulaten, Pulvern, Flakes, Körnern, Mehl oder dergleichen.

### Stand der Technik

Dosiervorrichtungen dieser Art gehören zum Stand der Technik. Sie werden zum Beispiel zum Beschicken von Mischern, Mühlen und dergleichen mit Granulat wie Kunststoffgranulaten oder dergleichen verwendet, beispielsweise auch um Farbkomponenten zu mischen. Die Zuführung erfolgt in der Regel über einen Trichter oder Zuführschlauch, der über einen Flansch an ein Gehäuse angeschlossen ist, das an der Anschlussstelle eine quadratische oder annähernd quadratische Ausbildung besitzt. Infolgedessen kommt es hier zu toten Zonen, in denen sich Nester bilden können, die den Materialfluss und damit den Durchfluss des zu fördernden Materials behindern. Auch die in den vertikalen Zuführkanal hineinragende Lagerung der Förderschnecke stört den Durchfluss des Schüttguts ebenfalls, da hier Schüttgut liegen bleiben oder festkleben kann, so dass auch hierdurch die Entleerung des Zuführkanals und damit ein ungestörter Durchfluss des Schüttguts behindert wird.

Aus der DE 196 29 824 A1 ist eine Fördereinrichtung für pulver- oder granulatförmige Feststoffe vorbekannt mit einer ein- oder mehrwelligen Förderschnecke und einem Aufgabeschacht; wobei zwischen dem Gehäuse der ein- oder mehrwelligen Förderschnecke und dem Aufgabeschacht ein die Schnecke(n) umschließendes Befeuchtungsbauteit zur Eindosierung einer Flüssigkeit in den Schneckenraum angeordnet ist, das aus einem Gehäusering mit mindestens einer Flüssigkeitszuführung und einem in dem Gehäusering einschiebbaren ringförmigen Düseneinsatz besteht, wobei zwischen dem Gehäusering und dem Düseneinsatz ein mit der Flüssigkeitszuführung verbundener Ringraum verbleibt. Der Düsenseinsatz ist mit Düsenbohrungen versehen, die den Ringraum mit dem Schneckenraum verbinden. Die Innenkontur des Düseneinsatzes ist kreisförmig, wobei die Bohrungen gleichmäßig über den Umfang verteilt entlang der Innenkontur angeordnet sind. Die Innenkontur des Düseneinsatzes ist brillenförmig gestaltet und dem Schneckenraum angepasst. Dabei sind die Düsenbohrungen am Düseneinsatz im Wesentlichen achsenparallel ausgeführt, wobei an dem Gehäusering eine ringförmige, schräg stehende Leitfläche derart angeordnet ist, dass die aus den Düsenbohrungen austretenden Flüssigkeitsstrahlen auf die Leitflächen auftreffen und von dort in den Schneckenraum umgelenkt werden. Die Leitfläche sind unter einem Winkel von 30° bis 45° gegen die Achse angebracht. Hierdurch soll die Befeuchtung vereinfacht werden, wobei das Produkt reproduzierbar und gleichmäßig befeuchtet werden kann. Im Übrigen könne man die Befeuchtung kontinuierlich vornehmen bei geringer Staubentwicklung.

Aus der GB 2 182 628 A ist eine Vorrichtung zum kontrollierbaren Zuführen von Granulat vorbekannt. Hierzu weist ein rohrförmiges Gehäuse ein mit seiner Längsachse orthogonal dazu angeordnetes Zuführrohr auf, auf dem ein Trichter angeordnet ist. Ein Motor treibt eine in dem rohrförmigen Rohr angeordnete Förderschnecke an, die in ein auf der gegenüberliegenden Seite des Zufuhrrohres, ebenfalls mit seiner Längsachse orthogonal zur Längsachse der Förderschnecke angeordnetes Auslassrohr austrägt.

Die GB 666,686 A beschreibt eine Vorrichtung zum Transportieren von brennbarem Material, zum Beispiel Koks oder Kohle in einem rohrförmigen Gehäuse mit einem schneckenartigen, motorisch angetriebenen Element, dem durch einen Fördertrichter von oben das Fördergut zugeführt wird.

Die US 3,355,766 A zeigt einen Extruder zum Heißaufschmelzen von thermoplastischen Material mit einer in einem Gehäuse angeordneten Förderschnecke und einer federbelasteten axial wirkenden Dichtung.

Aus der GB 1,055,251 A ist ein pneumatisches Fördersystem mit einer Förderschnecke vorbekannt.

Aus der EP 1 544 138 A ist eine Vorrichtung mit Förderschnecke zum Fördern von pulverförmigen und trockenen Gütern vorbekannt.

### Aufgabe

Der Erfindung liegt die Aufgabe zugrunde, eine Dosiervorrichtung gemäß der vorausgesetzten Gattung derart auszugestalten, dass sie bei allen in Betracht kommenden Schüttgütern, auch bei leichtem Mahlgut wie bei schwerfließenden Mahlgütern hohe Förderleistungen ermöglicht.

### Lösung

Die Aufgabe wird durch die in Patentanspruch 1wieder-gegebenen Merkmale gelöst.

### Einige Vorteile

Eine erfindungsgemäße Dosiervorrichtung besitzt einen kreisrunden, zylindrischen, vertikal verlaufenden Zuführkanal, der keine den Fluss störende Kanten oder Übergänge aufweist. Der Zuführtrichter oder Zuführschlauch ist so gearbeitet, dass er zum Zuführkanal hin den gleichen Radius, wie der Zuführkanal in dem Gehäuse an der Anschlussöffnung aufweist, so dass er genau mit der Peripherie des Zuführkanals sprunglos koaxial anschließt. Lediglich das als kegelstumpfförmiger Dichtkörper ausgebildete Rückdrucklager für die Förderschnecke kann etwas horizontal in den Zuführkanal hineinragen. Durch die erfindungsgemäße Ausbildung des als konischer Dichtkörper ausgebildeten Rückdrucklagers kann hier kein Material liegen bleiben. Dadurch, dass der vertikale Zuführkanal auch unterhalb der Förderschnecke mit gleichem Durchmesser zylindrisch bis zu einem Entleerungsschieber fortgeführt wird, ist eine saubere und schnelle Entleerung des Zuführkanals auf einfache Art und Weise möglich.

Eine erfindungsgemäße Dosiervorrichtung kann zur Beschickung von z. B. Extrudern, Spritzgussmaschinen, von Mischern, Mühlen, zum Beispiel auch in Mischanlagen für große Mengen Granulat und/oder sehr leichtem Mahlgut, verwendet werden, oder als Speisegerät für unterfütterte Fahrweise bzw. für Fahrweise vom vollen Trichter dienen.

Besonders vorteilhaft ist, dass die Dosiervorrichtung nach der Erfindung nicht nur für hohe Leistungen von zum Beispiel 4000 bis 8000 kg/h, vorzugsweise 6600 kg/h, sondern vor allem auch für die Dosierung von sehr leichtem Mahlgut geeignet ist. Durch den großen Einzug und den entsprechenden Trichter-Auslauf können auch schwerfließende Mahlgüter verarbeitet werden.

Da durch die besondere Ausgestaltung des vertikalen Zufuhrkanals auch eine schnelle Entleerung möglich ist, lässt sich eine Dosiervorrichtung auch entsprechend schnell reinigen. Dies ermöglicht einen raschen Materialwechsel. Zum Schneckenwechsel kann der Motor mit Schnellverschlüssen problemlos weggeklappt werden.

### Weitere erfinderische Ausgestaltungen 2

Weitere erfinderische Ausgestaltungen sind in den Patentansprüchen 2 bis 12 beschrieben, die auch eigenständige Lösungen der Aufgabe darstellen. Bei Ausgestaltung gemäß Patentanspruch 3 ergibt sich eine schüttgutdichte Abdichtung durch den Dichtkörper selbst im Zusammenhang mit diesen zugeordneten Dichtungen.

Patentanspruch 4 ermöglicht eine zuverlässige, fliegende Lagerung der Förderschnecke.

Patentanspruch 5 beschreibt eine vorteilhafte Ausführungsform.

Wird eine Dosiervorrichtung gemäß Patentanspruch 6 ausgestaltet, so lässt sich der Antriebsmotor mit dem Kupplungsteil in einfacher Weise nach Lösen eines Schnellverschlusses seitlich wegschwenken und damit außer Kupplungsstellung und durch eine entgegengesetzte Schwenkstellung und Anbringung der Schnellverschlüsse auch wieder in Kupplungsstellung bringen. Dadurch lassen sich Wartungs- und Reinigungsarbeiten schnell und problemlos durchführen.

Bei der Dosiervorrichtung nach Patentanspruch 7 sind die Schnellverschlüsse als Kniehebelgelenke ausgebildet, die eine zuverlässige und schnelle Bedienung ermöglichen.

Durch die Verwendung von Reduzierrohren unterschiedlichen Durchmessers lassen sich auch Förderschnecken unterschiedlich ausgestalten und damit unterschiedliche Charakteristiken und Fördereigenschaften je nach dem zu fördernden Schüttgut einsetzen. Die Längsnut ermöglicht hierdurch zusammen mit der Arretierschraube eine verdrehsichere Arretierung in dem Anschlussstutzen des Gehäuses - Patentanspruch 8.

Besonders vorteilhaft ist eine Ausführungsform nach Patentanspruch 9, bei welcher das Ende des Reduzierrohres, dass dem Zuführkanal zugewandt ist, entsprechend der Durchdringungskurve gestaltet ist, so dass sich hier keine Schüttgutnester bilden können, sondern der Durchfluss reibungsarm vonstatten geht.

Die Dosiervorrichtung nach Patentanspruch 10 weist an der Unterseite des Gehäuses einen Absperrschieber auf, der in Führungen angeordnet ist, und der eine schnelle Entleerung und damit Reinigung der Dosiervorrichtung ermöglicht.

Auch bei der Ausführungsform nach Patentanspruch 11 ergibt sich ein glatter Durchlauf für das zugeführte Schüttgut, weil der als Rückdrucklager ausgebildete Gegendruckkörper in axialer Projektion des Zuführkanals gesehen außerhalb oder annähernd außerhalb der Umgrenzung dieses Zuführkanals angeordnet ist.

Patentanspruch 12 beschreibt eine weitere vorteilhafte Ausführungsform der Erfindung.

In der Zeichnung ist die Erfindung - teils schematisch - beispielsweise veranschaulicht. Es zeigen:
- Fig. 1: eine Dosiervorrichtung gemäß der Erfindung in perspektivischer Darstellung, ohne Zuführtrichter;
- Fig. 2: die aus Fig. 1 ersichtliche Dosiervorrichtung, ebenfalls perspektivisch dargestellt, teils aufgeschnitten, ohne unteren Absperrschieber;
- Fig. 3: einen teilweise axialen Längsschnitt in Richtung der Linie III - III der Fig. 1;

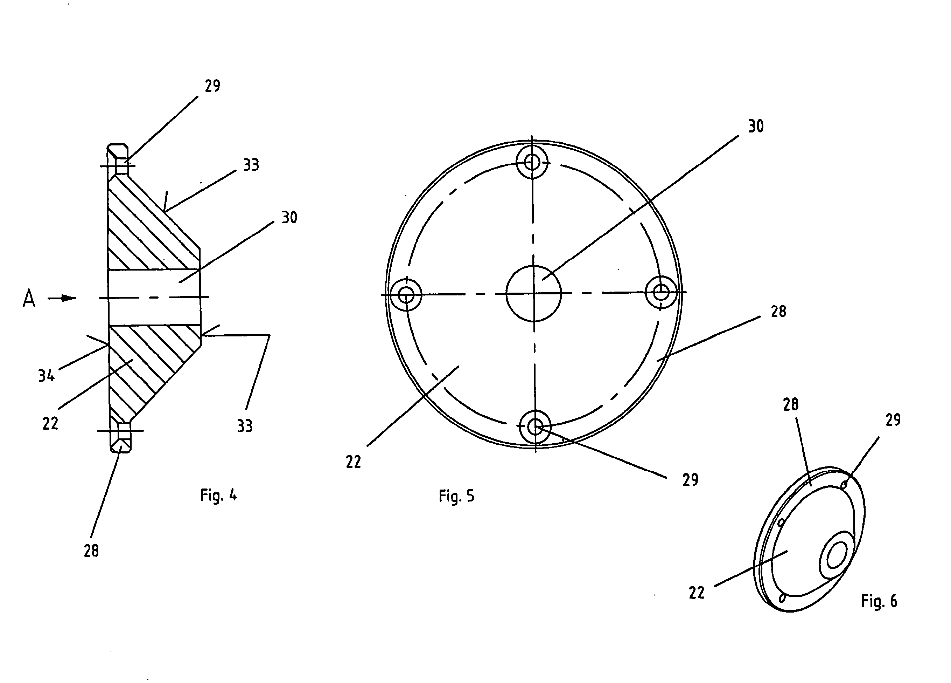

- Fig. 4: ein kegelstumpfförmiges Innenteil eines zweiteiligen Dichtkörpers im axialen Längsschnitt;
- Fig. 5: eine Ansicht in Richtung des Pfeiles A der Fig. 4;
- Fig. 6: das aus den Fig. 4 und 5 ersichtliche kegelstumpfförmige Innenteil des Dichtkörpers in perspektivischer Darstellung;
- Fig. 7: ein als Außenring ausgebildetes Außenteil des Dichtkörpers, ebenfalls im axialen Längsschnitt;
- Fig. 8: eine Ansicht in Richtung des Pfeiles B der Fig. 7;
- Fig. 9: eine Ansicht in Richtung des Pfeiles C der Fig. 7;
- Fig. 10: das aus den Fig. 7 bis 9 ersichtliche Außenteil des Dichtkörpers in perspektivischer Darstellung, von der Innenseite her gesehen;
- Fig. 11: das aus Fig. 10 ersichtliche als Außenring ausgebildete Außenteil des Dichtkörpers in Blickrichtung des Pfeiles D der Fig. 10;

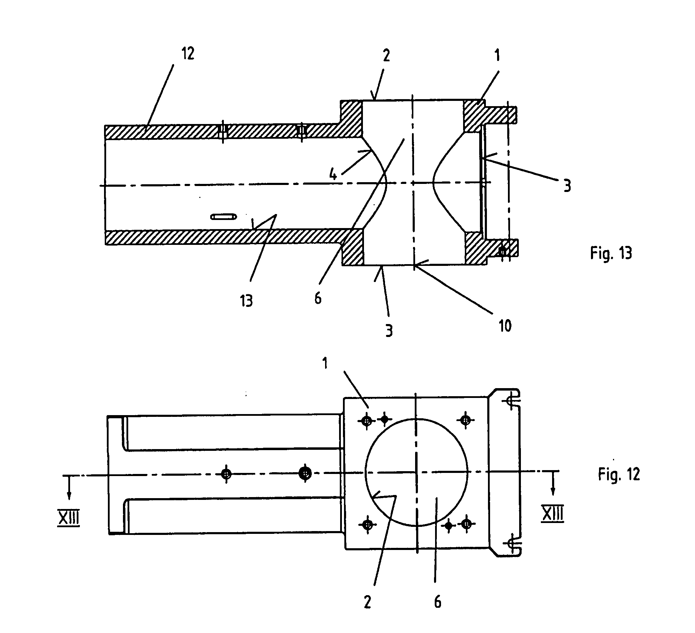

- Fig. 12: ein Gehäuse mit materialmäßig einstückigem Anschlussstutzen für eine Förderschnecke in der Draufsicht;
- Fig. 13: einen Axialschnitt nach der Linie XIII ― XIII der Fig. 12;
- Fig. 14: ein Reduzierrohr im Längsschnitt;
- Fig. 15: das aus Fig. 14 ersichtliche Reduzierrohr in perspektivischer Darstellung;
- Fig. 16: das aus Fig. 14 ersichtliche Reduzierrohr in der Draufsicht und
- Fig. 17: eine Förderschnecke, teils im axialen Längsschnitt, teils in der Ansicht.

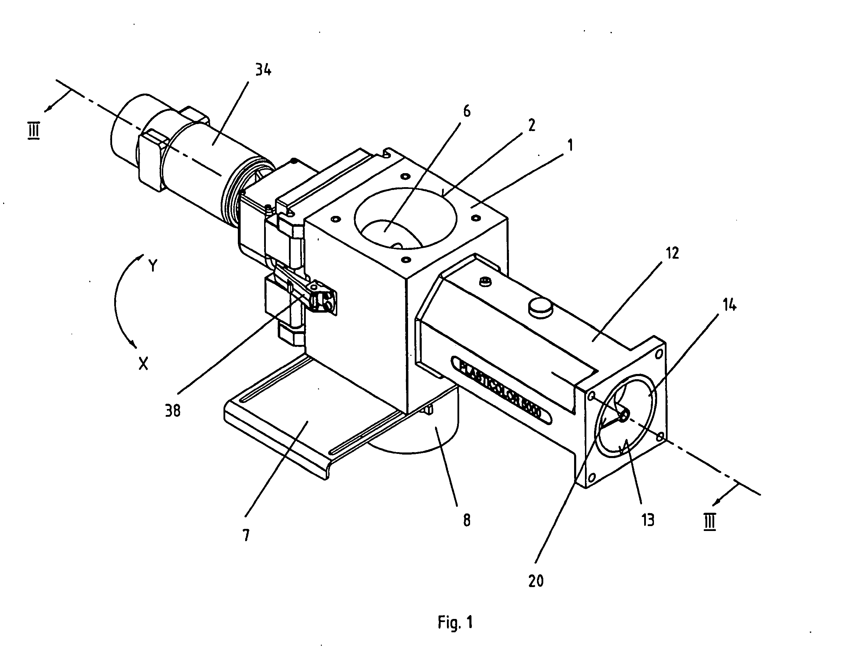

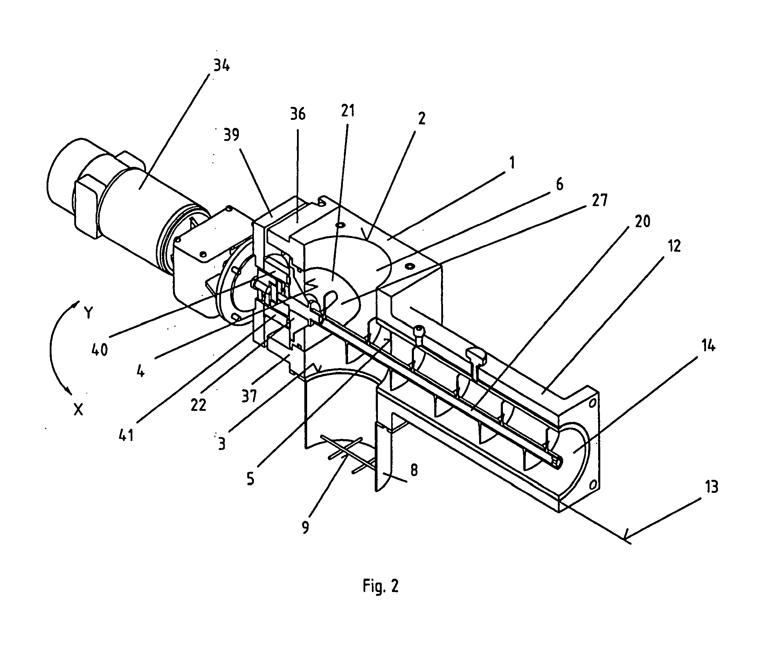

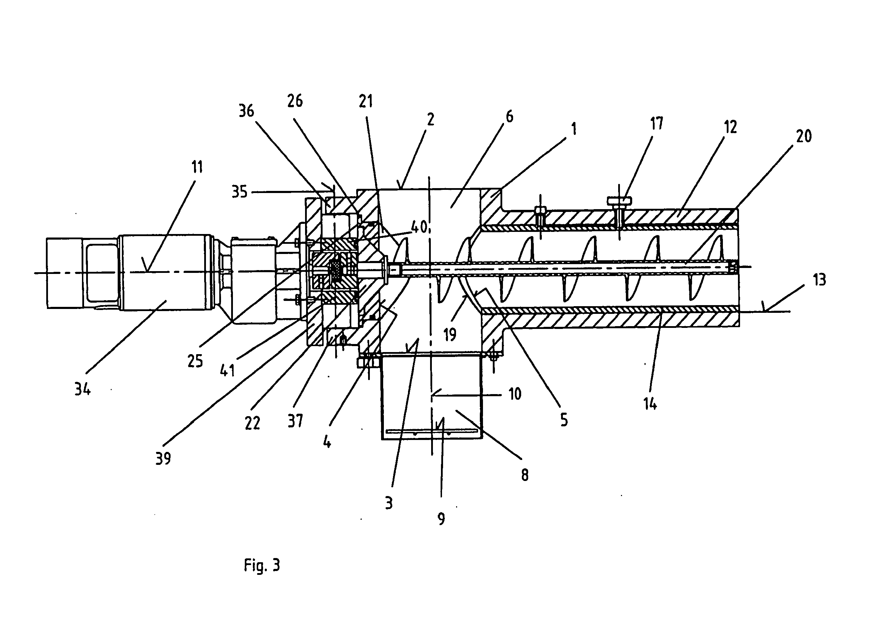

Mit dem Bezugszeichen 1 ist ein Gehäuse bezeichnet, das auf je zwei gegenüberliegenden Seiten kreisrunde Anschlussöffnungen 2, 3 bzw. 4, 5 aufweist. Die Mittelpunkte der Anschlussöffnungen 2, 3 einerseits sowie 4, 5 andererseits sind jeweils koaxial zueinander angeordnet. Die Radien der Anschlussöffnungen 2, 3 sowie 4, 5 sind bei der dargestellten Ausführungsform gleich groß. Außerdem münden die Anschlussöffnungen 2, 3 einerseits sowie 4, 5 andererseits in Kanäle oder Kanalabschnitte mit gleich großem Durchmesser wie die zugehörigen Anschlussöffnungen 2, 3 bzw. 4, 5, was bedeutet, dass die Anschlussöffnungen sprunglos und somit glattwandig, zylindrisch in die entsprechenden Kanäle oder Kanalabschnitte einmünden. An den Anschlussöffnungen 2 ist ein nicht dargestellter Trichter oder dergleichen zum Zuführen von Schüttgütern angeordnet, deren Mündungsöffnung koaxial zu der Anschlussöffnung 2 ausgerichtet ist und dessen Ausströmöffnung den gleichen Durchmesser wie die Anschlussöffnung 2 aufweist, so dass sich ein sprungloser Übergang von dem Zuführtrichter oder der sonstigen hier vorgesehenen Zuführungseinrichtung, z. B. Zuführschlauch, in die Anschlussöffnung 2 und den sich daran anschließenden vertikalen Zuführkanal 6 ergibt. An der Unterseite dieses Zuführkanals 6 ist bei der dargestellten Ausführungsform ein in Führungen orthogonal zur Längsachse des Zuführkanals 6 verschieblich angeordneter Absperrschieber 7 (Fig. 1) in Gleitführungen längsverschieblich angeordnet, der die untere Anschlussöffnung 3 schüttgutdicht verschließt, aber auch die Anschlussöffnung zu einem Auslassstutzen 8 (Fig. 1, 2 und 3) freigeben kann, damit Material aus dem Gehäuse 1, insbesondere aus dem Zuführkanal 6, rasch entfernt werden kann, um zum Beispiel Materialwechsel vornehmen zu können.

Mit dem Bezugszeichen 9 ist ein Sicherungsgitter bezeichnet, dessen Maschenweite so bemessen ist, dass ein Hineinfassen in den Auslassstutzen 8 und damit in den Zuführkanal 6 nicht möglich ist.

Die Längsachse 10 des Zuführkanals 6 einerseits, die durch die Mittelpunkte der Anschlussöffnungen 2 und 3 verläuft und die Längsachse 11, die durch die Mittelpunkte der Anschlussöffnungen 4, 5 andererseits verläuft, schneiden sich orthogonal vorzugsweise in der Mitte des Zuführkanals 6 innerhalb des Gehäuses 1.

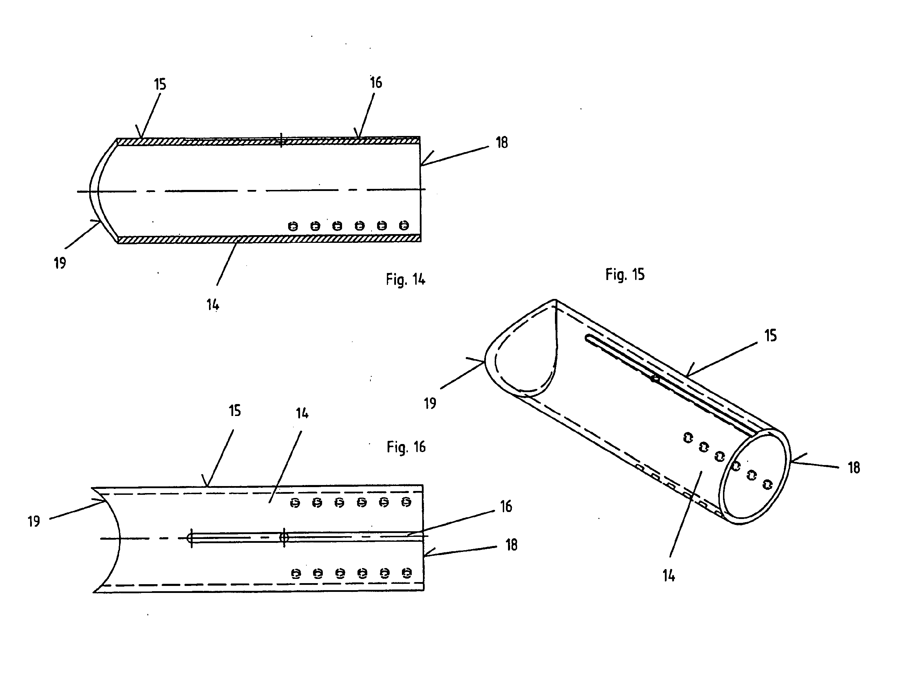

Mit der Anschlussöffnung 5 des Gehäuses 1 ist ein bei der dargestellten Ausführungsform materialmäßiger Anschlussstutzen 12 verbunden, der aber auch mit einem nicht dargestellten Flansch schüttgutdicht angeflanscht und abgedichtet sein kann. Dieser Anschlussstutzen 12 ist bei der dargestellten Ausführungsform (Fig. 1) außen mehreckig ausgebildet, weist allerdings in seinem Innern einen durchgehenden zylindrischen Kanal 13 auf, in dem ein Reduzierrohr 14 angeordnet ist. Das Reduzierrohr 14 kann aus einem geeigneten Kunststoff, zum Beispiel aus Polyamid, bestehen, das an seiner Außenseite zylindrisch ausgebildet ist (Fig. 14 bis 16).

Das Reduzierrohr 14 liegt mit seiner äußeren Mantelfläche 15 satt an der zylindrischen Innenwand des Kanals 13 des Anschlussstutzens 12 an. Das Reduzierrohr 14 weist an seiner in der Zeichnung gesehen oberen Seite eine Längsnut 16 auf, in die eine Arretierschraube 17 mit orthogonaler Längsachse zur Längsachse des Anschlussstutzens 12 von außen einschraubbar ist, um das Reduzierrohr 14 in der vorgesehenen Position zu führen und auch zu arretieren.

An seiner nach außen weisenden Stirnseite 18 ist das Reduzierrohr 14 mit einer orthogonal zur Längsachse des Anschlussstutzens 12 verlaufenden Wand versehen, die bündig mit der hier vorgesehenen Stirnseite des Anschlussstutzens 12 abschließt (Fig. 1 bis 3).

An seinem entgegengesetzten Ende weist dagegen das Reduzierrohr 14 eine Formgebung 19 auf, die der Durchdringungskurve des Reduzierrohres 14 und des Anschlussstutzens 12 in den Zuführkanal 6 entspricht, derart, dass die Formgebung 19 sprunglos und der Kanal 13 mit den Wandungen des Zuführkanals 6 abschließen, so dass sich hier keine Materialnester bilden können oder Materialtransport behindert wird. Die Wandung des Zuführkanals 6 ist an der Durchdringungskurve praktisch glattwandig ausgebildet, so dass es zu einem ungestörten Materialfluss kommt.

Das Reduzierrohr 14 wird koaxial von einer Förderschnecke 20 durchgriffen, die fliegend in einem aus einem Außenteil 21 und einem Innenteil 22 bestehenden Dichtkörper im Bereich der Öffnung 4 gelagert ist. Der zweiteilige, aber funktionell einstückige, kegelstumpfförmige Dichtkörper, gebildet aus dem als Außenring ausgebildeten Außenteil 21 und dem kegelstumpfförmigen Innenteil 22 ist in der Anschlussöffnung 4 gelagert.

Das Außenteil 21 weist ein ringförmiges Teil 23 mit ein oder zwei axial beabstandeten Nuten 24 zur Aufnahme je einer Dichtung auf, wobei ein flanschförmiges Teil 25 in einer entsprechenden ringförmigen Aussparung der hier vorgesehenen Stirnseite des Gehäuses 1 formschlüssig angeordnet ist und hier ebenfalls abgedichtet sein kann. Die Außenseite des ringförmigen Teils 25 kann bündig mit der hier vorgesehenen Außenseite des Gehäuses 1 abschließen.

Das Außenteil 21 weist eine kegelstumpfförmige Aussparung 26 zur formschlüssigen Aufnahme des kegelstumpfförmigen Innenteils 22 auf. Das flanschförmige Teil 25 kann über seinen Umfang mit mehreren Durchtrittsöffnungen zum Durchgreifen von Schraubbolzen versehen sein (nicht dargestellt), durch die sich das Außenteil 21 mit dem Innenteil 22 funktionell einstückig, aber lösbar, verbinden lässt.

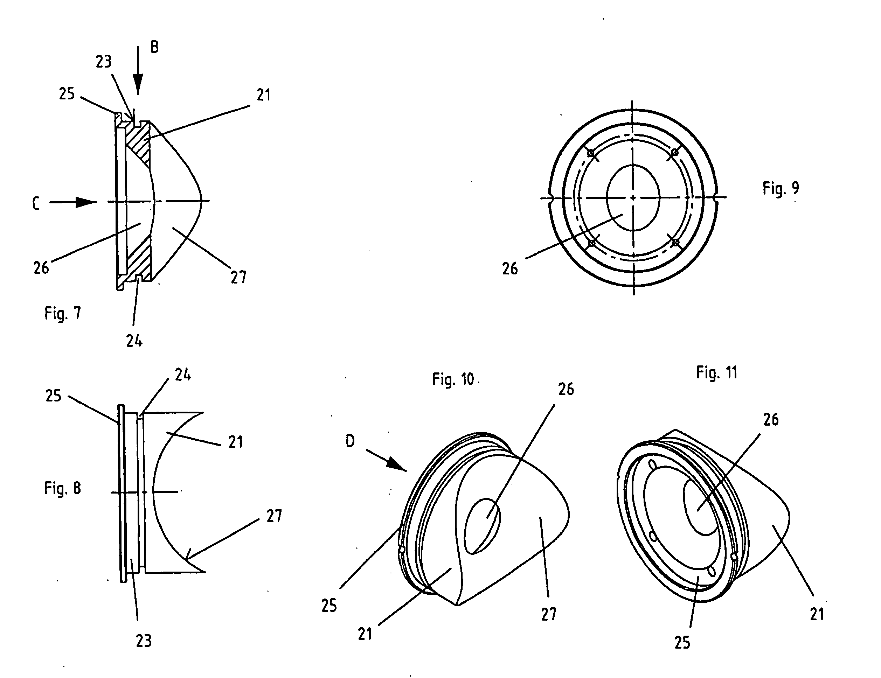

Wie insbesondere aus den Fig. 7 sowie 10 und 11 zu erkennen ist, weist das als Außenring ausgebildete Außenteil 21 an seinem durch die Anschlussöffnung 4 in den Zuführkanal 6 hineinragenden Längenabschnitt eine Formgestaltung 27 auf, die der Durchdringungskurve in den hier vorgesehenen Anschlusskanal entspricht, derart, dass die Formgestaltung 27 des Außenteils 21 glattwandig und demgemäß sprunglos in den Zuführkanal 6 einmündet und mit der Zylinderwand des Zuführkanals sprunglos glattwandig abschließt und dadurch den Materialdurchfluss in keiner Weise behindert.

In der kegelstumpfförmigen Aussparung 26 des Außenteils 21 ist das Innenteil 22 formschlüssig angeordnet und bildet ein als Rückdrucklager ausgebildetes Gegendrucklager für die fliegende Lagerung der Förderschnecke 20. In der in Richtung der Längsachse 10 von oben (in der Zeichnungsebene der Fig. 1 bis 3) gesehenen Blickrichtung ragt das kegelförmige Innenteil 22 gar nicht oder kaum in den lichten Querschnitt des Zuführkanals 6, so dass das Innenteil 22 ebenfalls den Materialdurchfluss durch den Zuführkanal 6 nicht behindert. Auf oder an dem Innenteil 22 kann sich somit kein Material ansetzen oder Nester bilden.

Das Innenteil 22 weist ebenfalls einen Flansch 28 mit über seinen Umfang verteilten Durchgangsbohrungen 29 auf, von denen nur eine aus Gründen der Einfachheit bezeichnet wurde. Die verschiedenen Durchgangsbohrungen 29 können über den Umfang des Flansches 28 mit gleichmäßigen Winkelabständen angeordnet sein. Durch die Durchgangsbohrungen greifen Befestigungsschrauben, die das Innenteil 22 mit dem Außenteil 21 funktionell einstückig, aber lösbar zu einem einheitlichen Dichtkörper verbinden.

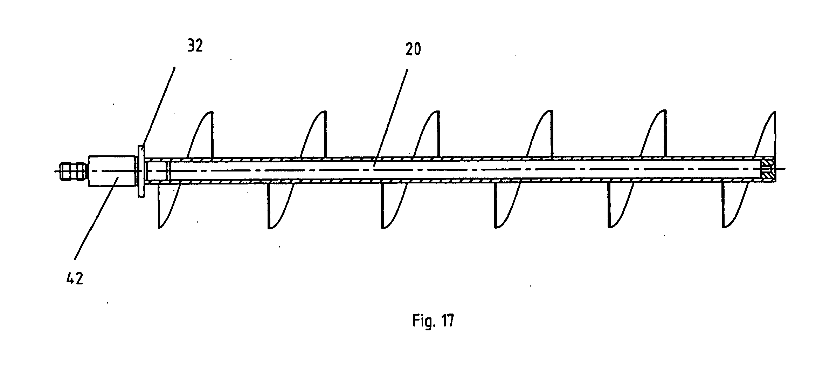

Das im wesentlichen kegelstumpfförmige Innenteil 22 besitzt eine zentrische Durchgangsbohrung 30, in der ein zylindrischer Längenabschnitt 31 (Fig. 17) der Förderschnecke 20 angeordnet ist, die mit einem Kragen 32, an der Stirnseite 33a des Innenteils 22 dicht anliegt und dadurch den Axialschub auf das Innenteil 22 überträgt. Dadurch erfolgt ebenfalls eine schüttgutdichte Lagerung der Förderschnecke 20.

Wie man erkennt, ergibt sich durch die besondere Formgestaltung 19 des Endabschnittes des Reduzierrohres 14 und durch die Formgestaltung 27 des Außenteils 21 und durch die Formgestaltung des Innenteils 22 an seinem Konus 33 ein ungestörter Durchfluss für das Material, da der kreisrunde Zuführkanal 6 den gleichen Durchmesser wie die Anschlussöffnung 2 aufweist und sich keine störenden Kanten und Übergänge ergeben. Vielmehr ist der an die Anschlussöffnung 2 angeschlossene Reduzierzylinder oder dergleichen so gearbeitet, dass er zum Zuführkanal 6 und dessen Anschlussöffnung 2 hin den gleichen Radius hat, wie der Zuführkanal 6. Er schließt daher genau mit der Rundung also dem Durchmesser des Zuführkanals 6 ab. Lediglich das als Kegelstumpf ausgebildete und durch das Innenteil 22 gebildete Rückdrucklager für die Förderschnecke 20 ragt gar nicht oder nur zu einem geringen axialen Längenabschnitt mit seinem Konus 33 und dem Gegendrucklager für die Förderschnecke 20 horizontal in diesen Zuführkanal 6 hinein. Durch die Ausbildung des Gegendrucklagers als Kegelstumpf bleibt beim Entleeren des Zuführkanals 6 auf diesem Rückdrucklager kein Material liegen. Durch die zylindrische Fortführung des kreisrunden Zuführkanals 6 mit gleichem Durchmesser auch unterhalb der Förderschnecke 20 bis zu dem Absperrschieber 7 ist eine saubere und schnelle Entleerung des Zuführkanals 6 einfach möglich.

Mit 34 ist eine Antriebsmotoreinheit für die Förderschnecke 20 bezeichnet, der ein steuer- oder regelbarer Elektromotor zugeordnet ist. Die Steuerungs- oder Regelmittel, zum Beispiel eine speicherprogrammierbare Steuerung, sind nicht dargestellt. Hierdurch lässt sich eine präzise Drehzahlregelung der Förderschnecke 20 mit hoher Drehzahlkonstanz bei linearem Regelverhalten erzielen. Durch geeignete Steuer- und Regelungsmittel ist eine sichere Reproduzierbarkeit der Einstellungen gegeben.

Die Antriebsmotoreinheit 34 ist über eine vertikale Schwenkachse 35, die in beabstandeten Lagern 36 bzw. 37 angeordnet sind, in Richtung X bzw. Y schwenkbar und durch Bajonettverschlüsse 38 am Gehäuse 1 schnell zu arretieren, aber auch wieder zu lösen. Die Antriebsmotoreinheit 34 besitzt eine Platte 39, der beabstandete Andrückstücke 40 bzw. 41 zugeordnet sind. Die Andrückstücke 40 und 41 wirken gegen das Innenteil 22 des zweiteiligen Dichtkörpers 21, 22 und arretieren diesen in der Anschlussöffnung 4. Durch Wegschwenken der Antriebsmotoreinheit 34 ist somit nicht nur ein rascher Zugang und Austausch der Antriebsmotoreinheit 34 gegeben, sondern es lässt sich auch der Dichtkörper, bestehend aus Innenteil 22 und den Außenteil 21 leicht und problemlos austauschen, ggf. zusammen mit der Förderschnecke 20, so dass sich die Dosiervorrichtung auch auf unterschiedliche Materialien durch Austausch unterschiedlicher Förderschnecken 20 und/oder des Reduzierrohres 14 bequem und schnell umrüsten lässt.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichen

1 Gehäuse
2 Anschlussöffnung
3 "
4 "
5 "
6 Zuführkanal
7 Absperrschieber
8 Auslassstutzen
9 Sicherungsgitter
10 Längsachse
11 "
12 Anschlussstutzen
13 Kanal
14 Reduzierrohr
15 Mantelfläche
16 Längsnut
17 Arretierschraube
18 Stirnseite
19 Formgebung
20 Förderschnecke
21 Außenteil
   Dichtkörper
22 Innenteil
23 Teil, ringförmiges
24 Nut
25 Teil, flanschförmiges
26 Aussparung, kegelstumpfförmige
27 Formgestaltung
28 Flansch
29 Durchgangsbohrung
30 "
31 Längenabschnitt
32 Kragen
33 Konus, Gegendruckkörper
33a Stirnseite
34 Motor, Antriebsmotoreinheit, Motoranordnung
35 Schwenkachse
36 Lager
37 "
38 Bajonettverschluss, Schnellverschluss
39 Platte
40 Andrückstück
41 "
42 Längenabschnitt

A Ansichtsrichtung
B "
C"
D "
X Schwenkrichtung der Antriebsmotoreinheit 34
Y " " " "

## Patentansprüche

1. Dosiervorrichtung zum Beschicken von Vorrichtungen wie z. B. Extruder, Spritzgussmaschinen oder dergleichen, mit Schüttgütern wie Pellets, Spänen, Granulaten, Pulvern, Flakes, Kömem, Mehl oder dergleichen, wobei von oben das Schüttgut über einen Anschlussstutzen zuförderbar ist mit einer seitlich am Gehäuse (1) angeordneten Antriebsmotoreinheit (34) für eine Förderschnecke (20), **dadurch gekennzeichnet, dass** das Gehäuse (1) auf je zwei gegenüberliegenden Seiten kreisrunde Anschlussöffnungen (2, 3 bzw. 4, 5) aufweist, deren Mittelpunkte jeweils paarweise koaxial zueinander angeordnet sind und die sprunglos in Kanäle (6) mit jeweils gleichem Durchmesser einmünden, deren Längsachsen (10, 11) entsprechend jeweils paarweise koaxial zueinander angeordnet sind, wobei das Schüttgut über einen Anschlussstutzen mit gleichem Durchmesser sprunglos in einen Zuführkanal (6) zuförderbar ist und die Förderschnecke (20) fliegend an einem kegelstumpfförmigen Dichtkörper (22) angeordnet ist, der mit einem Außenteil (21) sprunglos entsprechend der Durchdringungskurve des hier vorgesehenen seitlichen Kanals und des ihn mit seiner Längsachse (10) orthogonal durchdringenden vertikalen Zuführkanals (6) mit der Innenwand des vertikalen Zuführkanals (6) abschließt und mit einem in Achsrichtung der Förderschnecke (20) angeordneten, im Gehäuse (1) angeordneten Innenteil (22) axiale und radiale Beanspruchungen der Förderschnecke (20) aufnimmt.

2. Dosiervorrichtung nach Anspruch 1, **dadurch gekennzeichnet, dass** der Dichtkörper (21, 22) zweiteilig ausgebildet ist, und der eine, als Innenteil (22) ausgebildete Teil kegelstumpfförmig mit einem äußeren Ringflansch (28) und Befestigungsmitteln in einem dem Gehäuse (1) zugeordneten Außenteil (21) formschlüssig angeordnet und über einen äußeren Ringflansch (28) und Befestigungsmitteln mit dem Außenteil (21) einstückig verbunden ist, wobei das kegelstumpfförmige Innenteil (22) eine als Gegendruckkörper ausgebildete radiale und axiale Lagerung für die Förderschnecke (20) bildet, wobei das Außenteil (21) mit seinem in den Zuführkanal (6) eindringenden Körperteil entsprechend der Durchdringungskurve eine sprunglose Formgestaltung (Mantelfläche 27) mit der Zylinderwand des Zuführkanals (6) bildet.

3. Dosiervorrichtung nach Anspruch 2, **dadurch gekennzeichnet, dass** das Außenteil (21) wenigstens eine, vorzugsweise zwei mit axialem Abstand zueinander angeordnete, in Ringnuten (24) vorgesehene Dichtungen aufweist, die das Außenteil (21) gegenüber dem Gehäuse (1) schüttgutdicht nach innen und außen abdichten.

4. Dosiervorrichtung nach Anspruch 2 oder 3, **dadurch gekennzeichnet, dass** das Außenteil (21) ebenso wie das Innenteil (22) je eine ihn axial durchsetzende Durchgangsöffnung (26 bzw. 30) aufweisen, und dass die Durchgangsöffnung (26 bzw. 30) des Innenteils (22) und des Außenteils (21) koaxial zueinander angeordnet sind und von einem Längenabschnitt (42) für die Förderschnecke (20) durchsetzt sind.

5. Dosiervorrichtung nach Anspruch 2 oder einem der darauf folgenden Ansprüche, **dadurch gekennzeichnet, dass** der das Innenteil (22) durchdringende Längenabschnitt (42) der Förderschnecke (20) mit einem Kupplungsteil versehen ist, das mit einem Antriebsteil des Antriebsmotors (34) formschlüssig durch Schwenkbewegung in und außer Eingriff bringbar ist.

6. Dosiervorrichtung nach Anspruch 5, **dadurch gekennzeichnet, dass** die Antriebsmotoreinheit (34) mit dem Kupplungsteil um eine am Gehäuse (1) angeordnete Schwenkachse (35) schwenkbeweglich angeordnet und durch einen Schnellverschluss (38), z. B. einen Kniehebelgelenkverschluss, in Kupplungsstellung arretierbar ist.

7. Dosiervorrichtung nach Anspruch 6, **dadurch gekennzeichnet, dass** der Schnellverschluss (38) durch ein Kniehebelgelenk gebildet ist.

8. Dosiervorrichtung nach Anspruch 1 oder einem der darauf folgenden Ansprüche, **dadurch gekennzeichnet, dass** die Förderschnecke (20) in einem auswechselbaren Reduzierrohr (14) angeordnet ist, das eine Längsnut (16) aufweist, in die eine von außen einschraubende Arretierschraube (17) mit ihrer Kuppe eingreift.

9. Dosiervorrichtung nach Anspruch 8, **dadurch gekennzeichnet, dass** das Reduzierrohr (14) an seinem dem Zuführkanal (6) zugewandten Ende formmäßig derart ausgebildet ist, dass diese Form (19) mit der Durchdringungskurve des Zuführkanals (6) eine sprunglose Oberfläche bildet.

10. Dosiervorrichtung nach Anspruch 1 oder einem der darauf folgenden Ansprüche, **dadurch gekennzeichnet, dass** an der Unterseite des Gehäuses (1) ein Absperrschieber (7) in Führungen angeordnet ist, der die untere Öffnung (4) verschließt.

11. Dosiervorrichtung nach Anspruch 2 oder einem der Ansprüche 3 bis 10, **dadurch gekennzeichnet, dass** der Gegendruckkörper (33) in axialer Projektionsrichtung des Zuführkanals (6) außerhalb der Umgrenzung dieses Zuführkanals (6) angeordnet ist oder nur mit einem geringen axialen Längenabschnitt in dem Zuführkanal (6) angeordnet ist.

12. Dosiervorrichtung nach Anspruch 6 oder einem der Ansprüche 7 bis 11, **dadurch gekennzeichnet, dass** der Antriebsmotoreinheit (34) mehrere, vorzugsweise zwei diametral gegenüberliegende, als Andrückstücke (40) ausgebildete Körper einstückig zugeordnet sind, die gegen das Innenteil (22) des Dichtkör pers (21) einwirken und diesen in der Anschlussöffnung (4) des Gehäuses (1) arretieren.

## Claims

1. Metering means for charging equipment such as extruders, injection-moulding machines and so forth with bulk materials such as pellets, chips, granulates, powders, flakes, grains, flour or the like, where the bulk material can be conveyed from above via a connecting pipe and with a drive motor unit (34) for a screw conveyor (20) which motor unit (34) is disposed on the side of the housing (1), **characterised in that** the housing (1) incorporates on each two opposing sides circular connecting holes (2,3 and 4, 5) the centre points of which are disposed in pairs coaxially and which lead uninterruptedly into ducts (6) each of which has the same diameter,
the longitudinal axes (10, 11) of which are correspondingly disposed in pairs coaxially, where the bulk material can be conveyed uninterruptedlyly into a feed duct (6) via a connecting pipe of the same diameter and the screw conveyor (20) is disposed cantileverwise on a truncated-cone-shaped sealing element (22) which with an external member (21) corresponding to the penetration curve of the lateral duct provided here and the vertical feed duct (6) penetrating it with its longitudinal axis (10) at right angles terminates level with the inner wall of the vertical feed duct (6) and with an inner member (22) disposed in the housing (1) and in the axial direction of the screw conveyor absorbs axial and radial stresses from the screw conveyor (20).

2. Metering means in accordance with claim 1, **characterised in that** the sealing element (21, 22) is constructed in two parts of which one part constructed as an inner member (22) is disposed form-fittingly in the shape of a truncated cone with an external ring flange (28) and fastening means in an outer member assigned to the housing (1) and is connected as a single piece to the outer member (21) by means of an outer ring flange (28) and fastening means, where the truncated-cone-shaped inner member (22) forms a radial and axial bearing constructed as a counter-pressure member for the screw conveyor, where the outer member (21) with its body member projecting into the feed duct (6) forms with the cylindrical wall of the feed duct (6) an uninterrupted design shape (shell surface 27) corresponding to the penetration curve.

3. Metering means in accordance with claim 2, **characterised in that** the outer member (21) incorporates one or more but preferably two seals which are set in annular grooves (24) a distance apart axially and which seal the outer member (21) relative to the housing (1) inside and outside to prevent the ingress and egress of bulk material.

4. Metering means in accordance with claim 2 or 3, **characterised in that** the outer member (21) and the inner member (22) each incorporate a through-hole (26 and 30) running through them axially and that the through-hole (26 and 30) of the inner member (22) and the outer member (21) are disposed coaxially and are penetrated by a longitudinal portion (42) for the screw conveyor (20).

5. Metering means in accordance with claim 2 or any one of the claims following it, **characterised in that** the longitudinal portion (42) of the screw conveyor (20) penetrating the inner member (22) is provided with a coupling member which can be form-fittingly engaged with and disengaged from a drive member of the drive motor (34) by a rotary movement.

6. Metering means in accordance with claim 5, **characterised in that** the drive motor unit (34) is by the coupling member rotatably disposed about an axis of rotation (35) disposed on the housing (1) and can be locked in the coupling position by means of a quick-release fastener (38) such as a toggle joint fastener.

7. Metering means in accordance with claim 6, **characterised in that** the quick-release fastener (38) is in the form of a toggle joint.

8. Metering means in accordance with claim 1 or any one of the claims following it, **characterised in that** the screw conveyor (20) is disposed in an exchangeable reducing pipe (14) having a longitudinal groove (16) into which a locking screw (17) screwing in from outside engages by its point.

9. Metering means in accordance with claim 8, **characterised in that** the reducing pipe (14) is at its end pointing towards the feed duct (6) shaped so that the shape (19) forms an uninterrupted surface with the penetration curve of the feed duct (6).

10. Metering means in accordance with claim 1 or any one of the claims following it, **characterised in that** a shut-off slide (7) to close the bottom hole (4) is disposed in guides on the underside of the housing (1).

11. Metering means in accordance with claim 2 or any one of claims 3 to 10, **characterised in that** the counter-pressure member (33) is disposed outside the envelope of this feed duct (6) in an axial direction of projection of the feed duct (6) or is disposed in the feed duct (6) only by a small axial longitudinal portion.

12. Metering means in accordance with claim 6 or any one of claims 7 to 11, **characterised in that** the drive motor unit (34) is integrally assigned a number of but preferably two diametrically opposed members constructed as pressure elements (40) which act on the inner member (22) of the sealing element (21) and retain the sealing element in the connecting hole (4) of the housing (1).

## Revendications

1. Dispositif de dosage servant à remplir des dispositifs tels que des extrudeuses, machines de moulage par injection ou similaires, avec des matières en vrac telles que des pellets, copeaux, granulés, poudres, flocons, grains, farines ou similaires, sachant qu'il est possible de faire arriver le produit en vrac par le haut via un embout de raccordement, comprenant une unité motorisée (34) agencée latéralement contre le carter (1) et entraînant une vis sans fin de convoyage (20), **caractérisé en ce que** le carter (1) présente, sur deux côtés opposés, des orifices de raccordement circulaires (2, 3 et 4, 5), dont les centres sont agencés par paires coaxiales respectives et qui débouchent sans transition dans des canaux (6) de mêmes diamètres respectifs dont les axes longitudinaux (10, 11) sont agencés correspondamment par paires coaxiales respectives, sachant qu'il est possible de convoyer la matière en vrac sans transition dans un conduit d'amenée (6) via un embout de raccordement de même diamètre, et que la vis sans fin de convoyage (20) est agencée « volante » contre un corps d'étanchéité (22) tronconique dont la pièce extérieure (21) se termine sans transition - conformément à la courbe de pénétration du conduit latéral prévu ici, et du conduit d'amenée (6) vertical le traversant perpendiculairement par son axe longitudinal (10) - contre la paroi intérieure du conduit d'amenée (6) vertical et dont une pièce intérieure (22) agencée dans le carter (1.) dans la direction axiale de la vis sans fin (20) de convoyage, absorbe les contraintes axiales et radiales de la vis sans fin (20) de convoyage.

2. Dispositif de dosage selon la revendication 1, **caractérisé en ce que** le corps d'étanchéité est configuré en deux pièces (21, 22) et qu'une pièce configurée en pièce intérieure (22) tronconique est agencée en adhérence de formes avec une bride annulaire (28) extérieure et des moyens de fixation dans une pièce extérieure (21) appartenant au carter (1) et est relié monobloc via une bride annulaire (28) extérieure et des moyens de fixation avec la pièce extérieure (21), sachant que la pièce intérieure (22) tronconique forme, pour la vis sans fin de convoyage (20), un palier radial et axial configuré en corps exerçant une pression antagoniste, sachant que la pièce extérieure (21) donne, par la partie de son corps pénétrant dans le conduit d'amenée (6) et conformément à la courbe de pénétration, une géométrie de configuration sans transition (surface enveloppante 27) avec la paroi cylindrique du conduit d'amenée (6).

3. Dispositif de dosage selon la revendication 2, **caractérisé en ce que** la pièce extérieure (21) présente au moins un et de préférence deux joints distants axialement l'un de l'autre et prévus dans des gorges annulaires (24), joints qui rendent étanche aux produits en vrac, vers l'intérieur et l'extérieur, la pièce extérieure (21) en face du carter (1).

4. Dispositif de dosage selon la revendication 2 ou 3, **caractérisé en ce que** la pièce extérieure (21) de même que la pièce intérieure (22) présentent un orifice de passage (26 et/ou 30) les traversant axialement, et **en ce que** les orifices de passage (26 et/ou 30) de la pièce intérieure (22) et de la pièce extérieure (21) sont agencés coaxiaux et sont traversés par un segment longitudinal (42) afférent à la vis sans fin de convoyage (20).

5. Dispositif de dosage selon la revendication 2 ou l'une des revendications suivantes, **caractérisé en ce que** le segment longitudinal (42) de la vis sans fin (20) traversant la pièce intérieure (22) est doté d'une pièce d'accouplement qu'il est possible, par un mouvement pivotant, d'accoupler par adhérence de formes avec la pièce d'entraînement du moteur d'entraînement (34) et de la découpler ensuite.

6. Dispositif de dosage selon la revendication 5, **caractérisé en ce que** l'unité à moteur d'entraînement (34) est agencée avec la pièce d'accouplement de façon à pouvoir pivoter autour d'un axe de pivotement (35) agencé contre le carter (1), et qu'une fermeture rapide (38), par exemple une fermeture à genouillère articulée permet de la bloquer en position accouplée.

7. Dispositif de dosage selon la revendication 6, **caractérisé en ce que** la fermeture rapide (38) est formée par une articulation à genouillère.

8. Dispositif de dosage selon la revendication 1 ou l'une des revendications suivantes, **caractérisé en ce que** la vis sans fin de convoyage (20) est agencée dans un tube réducteur (14) interchangeable présentant une gorge longitudinale (16) dans laquelle engrène l'extrémité d'une vis de retenue (17) à visser de l'extérieur.

9. Dispositif de dosage selon la revendication 8, **caractérisé en ce que** la forme du tube réducteur (14) est configurée de telle sorte en son extrémité regardant le conduit d'amenée (6), que cette forme (19) crée une surface sans transition avec la courbe de pénétration du conduit d'amenée (6).

10. Dispositif de dosage selon la revendication 1 ou l'une des revendications suivantes, **caractérisée en ce que** sur le côté inférieur du boîtier (1) est agencé dans les guidages un tiroir de fermeture (7) qui obture l'orifice inférieur (4).

11. Dispositif de dosage selon la revendication 2 ou l'une des revendications 3 à 10, **caractérisé en ce que** le corps (33) exerçant la pression antagoniste est agencé, dans le sens de projection axial du conduit d'amenée (6), hors des limites dudit conduit d'amenée (6) ou n'est agencé dans le conduit d'amenée (6) que sur un court segment longitudinal axial.

12. Dispositif de dosage selon la revendication 6 ou l'une des revendications 7 à 11, **caractérisé en ce qu'**à l'unité d'entraînement motorisée (34) sont attribués plusieurs, de préférence deux corps monoblocs diamétralement opposés configurés en pièces d'applique (40), qui agissent contre la pièce intérieure (22) du corps d'étanchéité (21) et le retiennent dans l'orifice de raccordement (4) du carter (1).
